(19) Europäisches Patentamt
European Patent Office
Office européen des brevets

(11) **EP 3 143 301 B1**

(12) **EUROPÄISCHE PATENTSCHRIFT**

(45) Veröffentlichungstag und Bekanntmachung des Hinweises auf die Patenterteilung:
**07.04.2021   Patentblatt 2021/14**

(21) Anmeldenummer: **15722930.3**

(22) Anmeldetag: **08.05.2015**

(51) Int Cl.:
*F16D 48/06* *(2006.01)*

(86) Internationale Anmeldenummer:
**PCT/EP2015/000950**

(87) Internationale Veröffentlichungsnummer:
**WO 2015/172876 (19.11.2015 Gazette 2015/46)**

(54) **VERFAHREN ZUM BETREIBEN EINES ANTRIEBSSTRANGS FÜR EIN KRAFTFAHRZEUG SOWIE ENTSPRECHENDER ANTRIEBSSTRANG**

METHOD FOR OPERATING A DRIVE TRAIN FOR A MOTOR VEHICLE AND CORRESPONDING DRIVE TRAIN

PROCÉDÉ PERMETTANT DE FAIRE FONCTIONNER UNE CHAÎNE CINÉMATIQUE DE PROPULSION D'UN VÉHICULE À MOTEUR ET CHAÎNE CINÉMATIQUE DE PROPULSION CORRESPONDANTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.05.2014   DE 102014007090**

(43) Veröffentlichungstag der Anmeldung:
**22.03.2017   Patentblatt 2017/12**

(73) Patentinhaber: **Audi AG**
**85045 Ingolstadt (DE)**

(72) Erfinder:
• **SAGEFKA, Michael**
**85092 Kösching (DE)**
• **STRASSER, Sebastian**
**85051 Ingolstadt (DE)**
• **BÄR, Michael**
**85053 Ingolstadt (DE)**
• **KNELY, Christian**
**85049 Ingolstadt (DE)**
• **MEIER, Thomas-Willibald**
**85055 Ingolstadt (DE)**
• **MIHAILESCU, Adrian**
**85057 Ingolstadt (DE)**
• **HÜFNER, Stefan**
**85055 Ingolstadt (DE)**

(74) Vertreter: **Lehle, Josef**
**AUDI AG**
**Patentabteilung**
**85045 Ingolstadt (DE)**

(56) Entgegenhaltungen:
EP-A2- 0 659 605          DE-A1- 19 954 282
DE-A1-102008 055 897    DE-A1-102009 005 378
US-A1- 2012 214 641

EP 3 143 301 B1

**Beschreibung**

Die Erfindung betrifft ein Verfahren zum Betreiben eines Antriebsstrangs für ein Kraftfahrzeug, mit wenigstens einer Primärantriebsachse und wenigstens einer Sekundärantriebsachse, die über eine Kupplung mit einem einstellbaren Übertragungsdrehmoment miteinander wirkverbunden sind. Die Erfindung betrifft weiterhin einen Antriebsstrang für ein Kraftfahrzeug. Siehe EP0659605 und DE19954282.

Das Verfahren dient dem Betreiben des Antriebsstrangs, wobei das Betreiben beispielsweise auf ein Antreiben des Kraftfahrzeugs, insbesondere ein Beschleunigen, gerichtet ist. Der Antriebsstrang ist für die Verwendung in dem Kraftfahrzeug vorgesehen, sodass die Erfindung auch ein Kraftfahrzeug mit einem entsprechend ausgestalteten Antriebsstrang betrifft. Der Antriebsstrang verfügt über die wenigstens eine Primärantriebsachse und die wenigstens eine Sekundärantriebsachse. Diese sind über die Kupplung miteinander wirkverbunden, wobei das Übertragungsdrehmoment der Kupplung, also das zwischen der Primärantriebsachse und der Sekundärantriebsachse über die Kupplung übertragene Drehmoment, einstellbar ist.

Die Primärantriebsachse ist eine Achse des Antriebsstrangs beziehungsweise des Kraftfahrzeugs, welche bei Vorliegen eines auf das Antreiben des Kraftfahrzeugs gerichteten Drehmoments stets mit diesem Drehmoment oder zumindest einem Teil davon beaufschlagt wird. Die Sekundärantriebsachse kann wahlweise mit dem Drehmoment beziehungsweise zumindest einem Teil des Drehmoments beaufschlagt werden. Zu diesem Zweck ist die Kupplung vorgesehen, die zwischen der Primärantriebsachse und der Sekundärantriebsachse vorliegt. In einem ersten Betriebszustand der Kupplung ist die Sekundärantriebsachse vollständig von der Primärantriebsachse entkoppelt. Entsprechend wird das Kraftfahrzeug lediglich mittels der Primärantriebsachse angetrieben. Die Übertragung eines Drehmoments von der Primärantriebsachse auf die Sekundärantriebsachse erfolgt mithin nicht. Das Übertragungsdrehmoment ist in diesem Fall gleich Null. In einem weiteren Betriebszustand der Kupplung ist das Übertragungsdrehmoment größer als Null, sodass das Übertragungsdrehmoment von der Primärantriebsachse auf die Sekundärantriebsachse übertragen wird. In diesem Fall trägt insoweit auch die Sekundärantriebsachse zum Antreiben des Kraftfahrzeugs bei.

Das Kraftfahrzeug verfügt gemäß den vorstehenden Ausführungen zumindest zeitweise über mehrere, insbesondere mindestens zwei, angetriebene Achsen, ermöglicht jedoch auch das Antreiben von lediglich der wenigstens einen Primärantriebsachse, insbesondere genau einer einzigen Primärantriebsachse. Beispielsweise ist die Primärantriebsachse permanent und/oder starr mit einer Antriebseinrichtung des Kraftfahrzeugs beziehungsweise des Antriebsstrangs wirkverbunden. Die Antriebseinrichtung weist dabei beispielsweise wenigstens ein Antriebsaggregat, beispielsweise eine Brennkraftmaschine und/oder eine elektrische Maschine, sowie eine Anfahrkupplung auf. Die Primärantriebsachse ist nun insbesondere über die Anfahrkupplung mit dem Antriebsaggregat wirkverbunden beziehungsweise wirkverbindbar, während eine Wirkverbindung zwischen der Sekundärantriebsachse und dem Antriebsaggregat vorzugsweise nur über die Primärantriebsachse, insgesamt also die Kupplung, die Primärantriebsachse und die Anfahrkupplung, vorliegt.

Die Kupplung kann beispielsweise als Reibungskupplung ausgeführt sein, insbesondere als Lamellenkupplung, beispielsweise als Lamellensperren-Übertragungskupplung. Das maximal übertragbare Moment der Kupplung wird beispielsweise über einen Betätigungsmechanismus beziehungsweise Aktuator steuernd und/oder regelnd eingestellt. Solange der Kupplungsschlupf, entsprechend einer normierten Differenz zwischen Eingangs- und Ausgangsdrehzahl der Kupplung, ungleich Null ist, entspricht das von dem Betätigungsmechanismus eingestellte Drehmoment auch dem tatsächlich übertragenen Drehmoment. Sobald der Kupplungsschlupf gleich Null ist, kann der Betrag des tatsächlich übertragenen Drehmoments nicht mehr bestimmt werden. Nur das maximal übertragbare Drehmoment ist entsprechend des eingestellten Drehmoments, welches als Übertragungsdrehmoment bezeichnet werden kann, bekannt.

Wird bei einem Kupplungsschlupf von Null das Übertragungsdrehmoment weiter erhöht, so wird dies aufgrund der unnötig hohen Presskraft an der Kupplung als Kupplungsüberpressung bezeichnet, insbesondere im Falle der Lamellenkupplung. Eine solche Kupplungsüberpressung hat jedoch zahlreiche Nachteile. Zum einen verbraucht der Betätigungsmechanismus der Kupplung mehr Energie und erzeugt unter Umständen Geräusche, welche von einem Fahrer des Kraftfahrzeugs als akustische Belastung empfunden werden können. Auch wird der Betätigungsmechanismus unnötig stark belastet, wodurch seine Lebensdauer negativ beeinflusst wird. Schließlich ist die Bestimmung des tatsächlich übertragenen Drehmoments lediglich mit einer geringen Genauigkeit möglich, weil der Wertebereich, in welchem es liegt, vergrößert wird.

Es ist nun Aufgabe der Erfindung, ein Verfahren zum Betreiben eines Antriebsstrangs für ein Kraftfahrzeug vorzuschlagen, mit welchen ein unnötig hohes Übertragungsdrehmoment, insbesondere eine Kupplungsüberpressung, bei gleichbleibender oder sogar verbesserter Traktion vermieden werden kann.

Dies wird erfindungsgemäß mit einem Verfahren mit den Merkmalen des Anspruchs 1 erreicht. Dabei ist vorgesehen, dass das Übertragungsdrehmoment reduziert wird, wenn an der Sekundärantriebsachse auf einen, einen bestimmten Schlupfgrenzwert überschreitenden Radschlupf erkannt wird. Beispielsweise ist es also vorgesehen, das Übertragungsmoment zu bestimmen, insbesondere anhand einer Fahrervorgabe eines Fahrers des Kraftfahrzeugs. Beispielsweise wird das Übertragungsdrehmoment von einem Steuergerät des Antriebsstrangs beziehungsweise des Kraftfahrzeugs bereitgestellt. Es kann nun vorgesehen sein, bestimmte Übertragungsdrehmomente zunächst an der Kupplung einzustellen. Wird nachfolgend auf den Radschlupf erkannt, welcher den bestimmten Schlupfgrenzwert überschreitet, so wird das Übertragungsdrehmoment reduziert und an der Kupplung eingestellt beziehungsweise das an der Kupplung eingestellte Übertragungsdrehmoment reduziert. Alternativ kann es selbstverständlich vorgesehen sein, dass nach dem Bestimmen des Übertragungsdrehmoments, jedoch vor seinem Einstellen an der Kupplung, bereits das Reduzieren des Übertragungsdrehmoments vorgenommen wird.

Im Falle eines hohen Radschlupfs, welcher im Gleitschlupfbereich liegt, ist mit einem Antriebskraftverlust zu rechnen. Das auch als Traktion bezeichnete Beschleunigungsvermögen des Kraftfahrzeugs wird durch die Verteilung des Antriebsmoments auf die Achsen, insbesondere also die Primärantriebsachse und die Sekundärantriebsachse, beeinflusst. Das Verhalten von an den Achsen vorgesehenen Rädern spielt dabei eine essenzielle Rolle. Die von einem Rad absetzbare Radkraft in Längsrichtung hängt insbesondere von der Radlast und dem Radschlupf ab. Der Radschlupf $\kappa$ berechnet sich aus der Raddrehgeschwindigkeit $v_{Wheel}$ und der Radmittelpunktsgeschwindigkeit $v_{Whee/Center}$ gemäß der Beziehung

$$\kappa = \frac{v_{Wheel} - v_{WheelCenter}}{v_{Wheel}}.$$

Der Kraftschlussbeiwert $\mu$ (auch Reibwert genannt) ist als Verhältnis der absetzbaren Längskraft $F_x$ zur Radlast $F_z$ für längsdynamische Reifenbelastung definiert. Es gilt hier:

$$\mu = \frac{F_x}{F_z}.$$

Für den Fall, dass die Geschwindigkeit der Sekundärantriebsachse niedriger ist als die der Primärantriebsachse, wird das mittels der Kupplung auf die Sekundärantriebsachse übertragene Drehmoment durch Erhöhen des Übertragungsdrehmoments erhöht, eventuell sogar bis zu einem maximal übertragbaren Drehmoment. Diese Lösung ist im Bereich des Deformationsschlupfs auch sinnvoll. Bei einem höheren Radschlupf ist dies jedoch nicht optimal, da es zu der beschriebenen Kupplungsüberpressung mit gleichzeitigem Längskraftverlust an der Sekundärantriebsachse kommen kann. Als Beispiel dafür gilt die beschleunigte Fahrt mit Radschlüpfen oberhalb des Deformationsschlupfs an allen angetriebenen Achsen, insbesondere an der Primärantriebsachse und der Sekundärantriebsachse. In einer solchen Situation führt eine Erhöhung des Übertragungsdrehmoments und damit des Radschlupfs an Rädern der Sekundärachse zu einer Absenkung der übertragenen beziehungsweise übertragbaren Längskraft.

Aus diesem Grund ist es nun vorgesehen, dass das Übertragungsdrehmoment reduziert wird, sobald eine Fahrsituation mit hohem Radschlupf erkannt wird. In diesem Fall soll also auf den, den Schlupfgrenzwert überschreitenden Radschlupf an der Sekundärantriebsachse erkannt werden. Die Reduktion des Übertragungsdrehmoments führt zu einer geringeren Anpresskraft an der Kupplung, insbesondere bei gleichbleibendem tatsächlich übertragenen Drehmoment.

Eine weitere Ausgestaltung der Erfindung sieht vor, dass die Kupplung als Lamellenkupplung ausgebildet ist und das Übertragungsdrehmoment durch Anpassen einer Anpresskraft der Lamellenkupplung eingestellt wird. Auf eine derartige Ausgestaltung der Kupplung wurde bereits vorstehend hingewiesen. Die Lamellenkupplung liegt beispielsweise als Lamellensperren-Übertragungskupplung vor. Durch entsprechendes Anpassen beziehungsweise Einstellen der Anpresskraft kann das gewünschte Übertragungsdrehmoment an der Lamellenkupplung eingestellt erden.

Eine Weiterbildung der Erfindung sieht vor, dass auf den Radschlupf an der Sekundärantriebsachse erkannt wird, wenn die Sekundärachsendrehzahl die Primärachsendrehzahl übersteigt. Eine derartige Differenz zwischen der Sekundärachsendrehzahl und der Primärachsendrehzahl kann insbesondere durch Elastizitäten des Antriebsstrangs auftreten. Liegt beispielsweise an Rädern der Primärantriebsachse ein geringerer Radschlupf vor als an den Rädern der Sekundärantriebsachse, so sinkt die Drehzahl der Primärantriebsachse im Vergleich zu der Drehzahl der Sekundärantriebsachse zumindest kurzfristig ab. Der Drehzahlunterschied ist insoweit ein Indiz dafür, dass der Radschlupf an den Rädern der Sekundärantriebsachse größer ist als an den Rädern der Primärantriebsachse. Entsprechend wird auf den Radschlupf an der Sekundärantriebsachse erkannt und das Reduzieren des Antriebsdrehmoments eingeleitet.

Eine bevorzugte Ausgestaltung der Erfindung sieht vor, dass auf den Radschlupf an der Sekundärantriebsachse erkannt wird, wenn eine aus der Primärachsendrehzahl und/oder der Sekundärachsendrehzahl bestimmte Fahrzeuggeschwindigkeit die tatsächliche Fahrzeuggeschwindigkeit übersteigt. Aus der Drehzahl wenigstens einer der Achsen, vorzugsweise mehrerer oder aller Achsen des Kraftfahrzeugs, kann zumindest näherungsweise eine theoretische Fahrzeuggeschwindigkeit bestimmt werden. Diese wird nun mit der tatsächlich vorliegenden Fahrzeuggeschwindigkeit verglichen. Ist letztere geringer, so kann darauf geschlossen werden, dass zumindest an den Rädern der Sekundärantriebsachse oder sowohl an den Rädern der Primärantriebsachse als auch an den Rädern der Sekundärantriebsachse Radschlupf vorliegt. Bevorzugt wird erst auf den Radschlupf an der Sekundärantriebsachse erkannt, wenn die theoretische Fahrzeuggeschwindigkeit die tatsächliche Fahrzeuggeschwindigkeit um eine bestimmte Geschwindigkeitstoleranz übersteigt, wobei diese Geschwindigkeitstoleranz beispielsweise anhand des Schlupfgrenzwerts ermittelt wird. Die tatsächliche Fahrzeuggeschwindigkeit kann auf beliebige Art und Weise ermittelt werden.

Eine weitere vorteilhafte Ausgestaltung der Erfindung sieht vor, dass auf den Radschlupf der Sekundärantriebsachse erkannt wird, wenn sowohl der Schlupf an der Primärantriebsachse als auch der Schlupf an der Sekundärantriebsachse den Schlupfgrenzwert überschreiten. Das Reduzieren des Übertragungsdrehmoments wird also nicht bereits dann ausgelöst, wenn lediglich der Schlupf an der Sekundärantriebsachse den Schlupfgrenzwert überschreitet. Vielmehr soll dies erst dann erfolgen, wenn der Schlupf an der Primärantriebsachse und an der Sekundärantriebsachse größer sind als der bestimmte Schlupfgrenzwert.

Eine weitere Ausgestaltung der Erfindung sieht vor, dass das Übertragungsdrehmoment auf einen Sollübertragungsdrehmoment reduziert wird, das einem über die Sekundärantriebsachse maximal absetzbaren Drehmoment entspricht. Letzteres wird beispielsweise mit der Beziehung

$$M_{Achse} = F_{Z,Achse} \cdot \mu_x \cdot r_{dyn}$$

ermittelt, wobei $M_{Achse}$ das maximal absetzbare Drehmoment, $F_{Z,Achse}$ die Achslast, $\mu_x$ der Fahrbahnreibwert und $r_{dyn}$ der dynamische Radhalbmesser der Räder der Sekundärantriebsachse bezeichnet. Durch die Reduzierung des Sollübertragungsdrehmoments auf das maximal absetzbare Drehmoment wird bevorzugt erreicht, dass der Radschlupf an der Sekundärantriebsachse reduziert wird, sodass sich der Fahrbahnreibwert beziehungsweise der Kraftschlussbeiwert zwischen Rad und Fahrbahn vergrößert. Entsprechend kann durch das Reduzieren des Übertragungsdrehmoments die Traktion des Kraftfahrzeugs verbessert werden. Das Reduzieren des Übertragungsdrehmoments erfolgt auf das Sollübertragungsdrehmoment, welches dem maximal absetzbaren Drehmoment entspricht.

In einer weiteren bevorzugten Ausführungsform der Erfindung ist vorgesehen, dass das maximal absetzbare Drehmoment unter Verwendung zumindest einer der folgenden Größen bestimmt wird: eine Achslast der Sekundärantriebsachse, einem Fahrbahnreibwert, einem dynamischen Radhalbmesser eines Rads der Sekundärantriebsachse und einem Übersetzungsverhältnis zwischen Kupplung und Sekundärantriebsachse. Auf die Achslast $F_{Z,Achse}$, den Fahrbahnreibwert $\mu_x$ und den dynamischen Radhalbmesser $r_{dyn}$ wurde vorstehend bereits hingewiesen. Zusätzlich kann in das maximal absetzbare Drehmoment beziehungsweise das Sollübertragungsdrehmoment das Übersetzungsverhältnis eingehen. Dieses ist beispielsweise einem Getriebe zugeordnet, welches zwischen der Kupplung und der Sekundärantriebsachse vorliegt. Das Sollübertragungsdrehmoment ermittelt sich insoweit aus der Beziehung

$$M_{Kupp} = i \cdot M_{Achse} \cdot$$

In einer weiteren Ausgestaltung der Erfindung ist vorgesehen, dass der Fahrbahnreibwert aus einer Längsbeschleunigung des Kraftfahrzeugs ermittelt wird. Zur Bestimmung des aktuellen Fahrbahnreibwerts können ein oder mehrere Sensoren herangezogen werden. Beispielsweise wird als Sensor ein Längsbeschleunigungssensor herangezogen. Insbesondere wird während eines Beschleunigungsvorgangs des Kraftfahrzeugs die dabei auftretende maximale Längsbeschleunigung ermittelt. Der Fahrbahnreibwert ergibt sich nun beispielsweise zumindest näherungsweise aus einer Division der maximalen Längsbeschleunigung durch die Gravitationskonstante g. Dieser geschätzte Fahrbahnreibwert kann für die Berechnung des Sollübertragungsdrehmoments herangezogen werden. Zusätzlich oder alternativ kann zum Ermitteln des Fahrbahnreibwerts selbstverständlich auch ein optischer Sensor herangezogen werden.

Für die Bestimmung der Achslast der Sekundärantriebsachse können ein oder mehrere Sensoren verwendet werden. Auch hier ist die Längsbeschleunigung, beispielsweise bestimmt mittels eines Längsbeschleunigungssensors, hinreichend, um die dynamischen Lastschwankungen zu berechnen.

Eine weitere Ausgestaltung der Erfindung sieht vor, dass das Übertragungsmoment wieder erhöht wird, wenn der Kupplungsschlupf der Kupplung einen Maximalwert überschreitet. Sollte das reduzierte Übertragungsdrehmoment zu niedrig sein, sodass der in der Kupplung auftretende Kupplungsschlupf übermäßig zunimmt, so wird das Übertragungsdrehmoment wieder erhöht. Eine derartige Situation wird vorzugsweise anhand der Abweichung zwischen der Primärachsendrehzahl und der Sekundärachsendrehzahl erkannt. Das auf die Sekundärantriebsachse übertragene Drehmoment wird mithilfe der Abweichung zwischen den Drehzahlen auf ein höheres Niveau steuernd und/oder regelnd eingestellt. Dabei kann eine Drehzahltoleranz zugelassen sein, sodass das Erhöhen des Übertragungsmoments erst dann erfolgt, wenn die Sekundärachsendrehzahl um diese Drehzahltoleranz kleiner ist als die Primärachsendrehzahl.

Vorzugsweise wird das Übertragungsmoment erhöht, bis der Kupplungsschlupf der Kupplung kleiner ist als der Maximalwert oder alternativ gleich Null ist. Nach dem Erhöhen wird erneut überprüft, ob der Radschlupf an der Sekundärantriebsachse den bestimmten Schlupfgrenzwert überschreitet und entsprechend reagiert. Insoweit wird also das Übertragungsdrehmoment erneut reduziert, falls der Radschlupf den Schlupfgrenzwert überschreitet.

Beispielsweise ist es also vorgesehen, den Antriebsstrang zunächst in einer ersten Betriebsart zu betreiben, in welcher das Übertragungsdrehmoment - falls notwendig - reduziert wird. Wird festgestellt, dass der Kupplungsschlupf den Maximalwert überschreitet, so wird aus der ersten Betriebsart in eine zweite Betriebsart gewechselt, in der das Übertragungsdrehmoment wieder erhöht wird. Ist der Kupplungsschlupf der Kupplung durch das Erhöhen des Übertragungsmoments wieder kleiner als der Maximalwert oder gleich Null, so wird erneut in die erste Betriebsart umgeschaltet. In dieser wird erneut überprüft, ob der Radschlupf den Schlupfgrenzwert überschreitet.

Die Erfindung betrifft weiterhin einen Antriebsstrang für ein Kraftfahrzeug, insbesondere zur Durchführung des Verfahrens gemäß den vorstehenden Ausführungen, mit wenigstens einer Primärantriebsachse und wenigstens einer Sekundärantriebsachse, die über eine Kupplung mit einem einstellbaren Übertragungsdrehmoment miteinander wirkverbunden sind. Dabei ist vorgesehen, dass der Antriebsstrang dazu ausgebildet ist, das Übertragungsdrehmoment zu reduzieren, wenn an der Sekundärantriebsachse auf einen, einen bestimmten Schlupfgrenzwert überschreitenden Radschlupf erkannt wird. Auf die Vorteile einer derartigen Ausgestaltung des Antriebsstrangs beziehungsweise einer derartigen Vorgehensweise wurde bereits hingewiesen. Sowohl das Verfahren als auch der Antriebsstrang können gemäß den vorstehenden Ausführungen weitergebildet sein, sodass insoweit auf diese verwiesen wird.

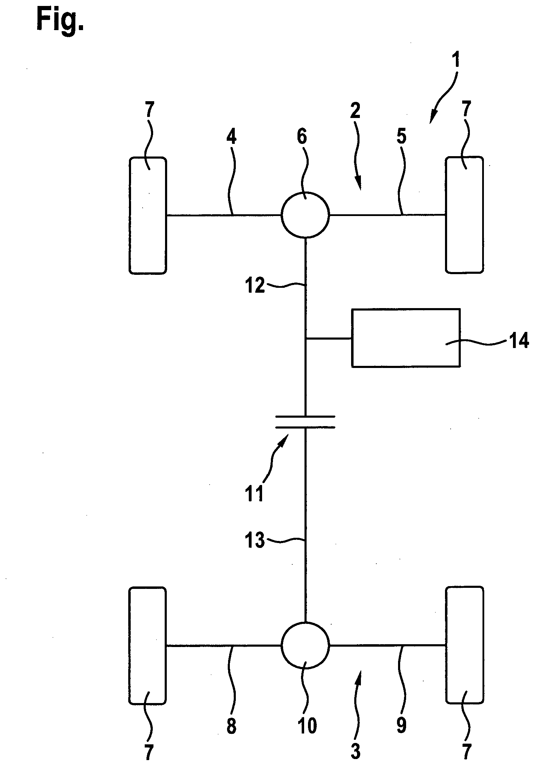

Die Erfindung wird nachfolgend anhand der in der Zeichnung dargestellten Ausführungsbeispiele näher erläutert, ohne dass eine Beschränkung der Erfindung erfolgt. Dabei zeigt die einzige

Figur eine schematische Darstellung eines Antriebsstrangs für ein Kraftfahrzeug.

Die Figur zeigt eine schematische Darstellung eines Antriebsstrangs 1, welcher beispielsweise Bestandteil eines nicht näher dargestellten Kraftfahrzeugs ist. Der Antriebsstrang 1 weist beispielsweise eine Primärantriebsachse 2 und eine Sekundärantriebsachse 3 auf. Die Primärantriebsachse 2 weist beispielsweise Teilachsen 4 und 5 auf, die über ein Achsdifferential 6 miteinander wirkverbunden sind. An jeder Teilachse 4 und 5 ist ein Rad 7 vorgesehen. Analog dazu verfügt die Sekundärantriebsachse 3 über Teilachsen 8 und 9, die über ein Achsdifferential 10 miteinander in Wirkverbindung stehen. An den Teilachsen 8 und 9 sind ebenfalls Räder 7 vorgesehen.

Die Primärantriebsachse 2 und die Sekundärantriebsachse 3 sind über eine Kupplung 11 mit einem einstellbaren Übertragungsdrehmoment wirkverbunden. Beispielsweise liegen dabei die Teilachsen 4 und 5 beziehungsweise 8 und 9 als Ausgangswellen des jeweiligen Achsdifferentials 6 beziehungsweise10 vor, während Eingangswellen 12 und 13 der Achsdifferentiale 6 und 10 mittels der Kupplung 11 miteinander koppelbar sind.

Der Antriebsstrang 1 verfügt weiterhin über eine Antriebseinrichtung 14. Diese verfügt beispielsweise über ein hier nicht näher dargestelltes Antriebsaggregat, beispielsweise eine Brennkraftmaschine und/oder eine elektrische Maschine. Die Antriebseinrichtung 14 kann weiterhin eine Anfahrkupplung aufweisen. Die Antriebseinrichtung 14 ist vorzugsweise permanent mit der Primärantriebsachse 2 beziehungsweise der entsprechenden Eingangswelle 12 wirkverbunden. Eine Wirkverbindung zwischen der Antriebseinrichtung 14 und der Sekundärantriebsachse 3 liegt lediglich über die Kupplung 11 vor. Das bedeutet, dass der Antriebsstrang 1 beziehungsweise das entsprechende Kraftfahrzeug eine permanent angetriebene Achse, nämlich die Primärantriebsachse 2, und eine lediglich zeitweise angetriebene Achse, nämlich die Sekundärantriebsachse 3, verfügt.

Während eines Fahrbetriebs des Antriebsstrangs 1 wird ein bestimmtes Übertragungsdrehmoment an der Kupplung 11 eingestellt. Wird nachfolgend festgestellt, dass an der Sekundärantriebsache 3 ein Radschlupf auftritt, welcher einen bestimmten Schlupfgrenzwert überschreitet, so wird das Übertragungsdrehmoment reduziert. Das Reduzieren des Übertragungsdrehmoments erfolgt dabei beispielsweise so weit, bis der Kupplungsschlupf der Kupplung 11 einen Maximalwert erreicht oder überschreitet. In letzterem Fall, wenn also der Kupplungsschlupf größer als der Maximalwert ist, kann das Übertragungsmoment wieder erhöht werden, vorzugsweise bis der Kupplungsschlupf dem Maximalwert entspricht oder kleiner ist als dieser.

Mit einer derartigen Vorgehensweise wird das Vorliegen eines zu großen Übertragungsdrehmoments an der Kupplung 11 verhindert und gleichzeitig die Traktion des Kraftfahrzeugs verbessert. Letzteres ist der Fall, weil der Radschlupf an der Sekundärantriebsachse 3 beziehungsweise an den Rädern 7 der Sekundärantriebsachse 3 verringert wird, sodass sich vorzugsweise der Kraftschlussbeiwert zwischen den Rädern 7 der Sekundärantriebsachse 3 und einem Untergrund des Kraftfahrzeugs vergrößert. Der Schlupf an der Sekundärantriebsachse 3 wird beispielsweise ermittelt, indem der Schlupf an den Rädern 7 der Sekundärantriebsachse 3 festgestellt und daraus der Mittelwert bestimmt wird. Analog kann vorgegangen werden, wenn der Schlupf der Primärantriebsachse 2 benötigt wird.

**BEZUGSZEICHENLISTE**

| | |
|---|---|
| 1 | Antriebsstrang |
| 2 | Primärantriebsachse |
| 3 | Sekundärantriebsachse |
| 4 | Teilachse |
| 5 | Teilachse |
| 6 | Achsdifferential |

7   Rad
8   Teilachse
9   Teilachse
10  Achsdifferential
11  Kupplung
12  Eingangswellen
13  Eingangswellen
14  Antriebseinrichtung

**Patentansprüche**

1. Verfahren zum Betreiben eines Antriebsstrangs (1) für ein Kraftfahrzeug, mit wenigstens einer Primärantriebsachse (2) und wenigstens einer Sekundärantriebsache (3), die über eine Kupplung (11) mit einem einstellbaren Übertragungsdrehmoment miteinander wirkverbunden sind, **dadurch gekennzeichnet, dass** zum Vermeiden einer Kupplungsüberpressung das Übertragungsdrehmoment durch Verringerung einer Anpresskraft der Kupplung (11) bei gleichbleibendem tatsächlich übertragenem Drehmoment reduziert wird, wenn an der Sekundärantriebsachse (3) einen bestimmten Schlupfgrenzwert überschreitenden Radschlupf erkannt wird.

2. Verfahren nach Anspruch 1, **dadurch gekennzeichnet, dass** die Kupplung (11) als Lamellenkupplung ausgebildet ist und das Übertragungsdrehmoment durch Anpassen einer Anpresskraft der Lamellenkupplung eingestellt wird.

3. Verfahren nach einem der vorhergehenden Ansprüche, **dadurch gekennzeichnet, dass** auf den Radschlupf an der Sekundärantriebsachse (3) erkannt wird, wenn die Sekundärachsendrehzahl die Primärachsendrehzahl übersteigt.

4. Verfahren nach einem der vorhergehenden Ansprüche, **dadurch gekennzeichnet, dass** auf den Radschlupf an der Sekundärantriebsachse (3) erkannt wird, wenn eine aus der Primärachsendrehzahl und/oder der Sekundärachsendrehzahl bestimmte Fahrzeuggeschwindigkeit die tatsächliche Fahrzeuggeschwindigkeit übersteigt.

5. Verfahren nach einem der vorhergehenden Ansprüche, **dadurch gekennzeichnet, dass** auf den Radschlupf an der Sekundärantriebsachse (3) erkannt wird, wenn sowohl der Schlupf an der Primärantriebsache (2) als auch der Schlupf an der Sekundärantriebsachse (3) den Schlupfgrenzwert überschreiten.

6. Verfahren nach einem der vorhergehenden Ansprüche, **dadurch gekennzeichnet, dass** das Übertragungsdrehmoment auf ein Sollübertragungsdrehmoment reduziert wird, das einem über die Sekundärantriebsachse (3) maximal absetzbaren Drehmoment entspricht.

7. Verfahren nach einem der vorhergehenden Ansprüche, **dadurch gekennzeichnet, dass** das maximal absetzbare Drehmoment unter Verwendung zumindest einer der folgenden Größen bestimmt wird: einer Achslast der Sekundärantriebsachse (3), einen Fahrbahnreibwert, einem dynamischen Radhalbmesser eines Rads (7) der Sekundärantriebsachse (3), und einem Übersetzungsverhältnis zwischen Kupplung (11) und Sekundärantriebsachse (3).

8. Verfahren nach einem der vorhergehenden Ansprüche, **dadurch gekennzeichnet, dass** der Fahrbahnreibwert aus einer Längsbeschleunigung des Kraftfahrzeugs ermittelt wird.

9. Verfahren nach einem der vorhergehenden Ansprüche, **dadurch gekennzeichnet, dass** das Übertragungsmoment wieder erhöht wird, wenn der Kupplungsschlupf der Kupplung (11) einen Maximalwert überschreitet.

10. Antriebsstrang (1) für ein Kraftfahrzeug, zur Durchführung des Verfahrens nach einem oder mehreren der vorhergehenden Ansprüche, mit wenigstens einer Primärantriebsachse (2) und wenigstens einer Sekundärantriebsache (3), die über eine Kupplung (11) mit einem einstellbaren Übertragungsdrehmoment miteinander wirkverbunden sind, **dadurch gekennzeichnet, dass** der Antriebsstrang (1) dazu ausgebildet ist, zum Vermeiden einer Kupplungsüberpressung das Übertragungsdrehmoment durch Verringerung einer Anpresskraft der Kupplung (11) bei gleichbleibendem tatsächlich übertragenem Drehmoment zu reduzieren, wenn an der Sekundärantriebsachse (3) auf einen, einen bestimmten Schlupfgrenzwert überschreitenden Radschlupf erkannt wird.

**Claims**

1. Method for operating a drive train (1) for a motor vehicle, having at least one primary drive axle (2) and at least one secondary drive axle (3), which are operatively interconnected with an adjustable transmission torque by means of a clutch (11), **characterised in that**, to avoid excessive clutch pressing, the transmission torque is reduced by decreasing a pressing force of the clutch (11) with a consistent actual transmitted torque, when wheel slip exceeding a determined slip threshold is detected on the secondary drive axle (3),

2. Method according to claim 1, **characterised in that** the clutch (11) is designed as a multi-plate clutch and the transmission torque is adjusted by adjusting a pressing force of the multi-plate clutch.

3. Method according to any of the preceding claims, **characterised in that**, when the secondary axle speed exceeds the primary axle speed, this is detected by means of the wheel slip at the secondary drive axle (3).

4. Method according to any of the preceding claims, **characterised in that**, when a vehicle speed determined from the primary axle speed and/or the secondary axle speed exceeds the actual vehicle speed, this is detected by means of the wheel slip at the secondary drive axle (3).

5. Method according to any of the preceding claims, **characterised in that**, when both the slip at the primary drive axle (2) as well as the slip at the secondary drive axle (3) exceed the slip threshold, this is detected by means of the wheel slip at the secondary drive axle (3).

6. Method according to any of the preceding claims, **characterised in that** the transmission torque is reduced to a target transmission torque, which corresponds to a maximum torque that can be reduced by means of the secondary drive axle (3).

7. Method according to any of the preceding claims, **characterised in that** the maximum torque that can be removed is determined by using at least one of the following variables: an axle load of the secondary drive axle (3), a road surface friction value, a dynamic wheel radius of a wheel (7) of the secondary drive axle (3) and a transmission ratio between the clutch and the secondary drive axle (3).

8. Method according to any of the preceding claims, **characterised in that** the road surface friction value is determined from a longitudinal acceleration of the motor vehicle.

9. Method according to any of the preceding claims, **characterised in that** the transmission torque is increased again when the clutch slip of the clutch (11) exceeds a maximum value.

10. Drive train (1) for a motor vehicle for implementing the method according to one or more of the preceding claims, having at least one primary drive axle (2) and at least one secondary drive axle (3), which are operatively interconnected with an adjustable transmission torque by means of a clutch (11), **characterised in that** the drive train (1) is designed, to avoid excessive clutch pressing, to reduce the transmission torque by decreasing a pressing force of the clutch (11) with a consistent actual transmitted torque, when wheel slip exceeding a determined slip threshold is detected on the secondary drive axle (3).

**Revendications**

1. Procédé permettant de faire fonctionner une chaîne cinématique de propulsion (1) pour un véhicule, avec au moins un essieu moteur primaire (2) et au moins un essieu moteur secondaire (3) qui sont reliés fonctionnellement par l'intermédiaire d'un embrayage (11) à un couple de transmission ajustable, **caractérisé en ce que** pour éviter une surpression de l'embrayage, le couple de transmission est réduit par une réduction d'une force de compression de l'embrayage (11) alors que le couple transmis reste en fait le même, lorsqu'un patinage de roue dépassant une valeur seuil de patinage déterminée est identifié au niveau de l'essieu moteur secondaire (3).

2. Procédé selon la revendication 1, **caractérisé en ce que** l'embrayage (11) est conçu comme un embrayage multidisques et **en ce que** le couple de transmission est ajusté par adaptation d'une force de compression de l'embrayage multidisques.

3. Procédé selon l'une quelconque des revendications précédentes, **caractérisé en ce qu'**un patinage de roue est identifié au niveau de l'essieu moteur secondaire (3) lorsque le nombre de tours d'essieu secondaire dépasse le nombre de tours d'essieu primaire.

4. Procédé selon l'une quelconque des revendications précédentes, **caractérisé en ce qu'**un patinage de roue est identifié au niveau de l'essieu moteur secondaire (3) lorsqu'une vitesse de véhicule déterminée à partir du nombre de tours d'essieu primaire et/ou du nombre de tours d'essieu secondaire dépasse la vitesse effective du véhicule.

5. Procédé selon l'une quelconque des revendications précédentes, **caractérisé en ce qu'**un patinage de roue est identifié au niveau de l'essieu moteur secondaire (3) lorsqu'à la fois le patinage au niveau de l'essieu moteur primaire (2) et également le patinage au niveau de l'essieu moteur secondaire (3) dépassent la valeur seuil de patinage.

6. Procédé selon l'une quelconque des revendications précédentes, **caractérisé en ce que** le couple de transmission est réduit à un couple de transmission théorique qui correspond à un couple pouvant être réduit au maximum par l'intermédiaire de l'essieu moteur secondaire (3).

7. Procédé selon l'une quelconque des revendications précédentes, **caractérisé en ce que** le couple pouvant être réduit au maximum est déterminé en utilisant au moins l'une des grandeurs suivantes : une charge d'essieu de l'essieu moteur secondaire (3), un coefficient de friction de chaussée, un rayon de roue dynamique d'une roue (7) de l'essieu moteur secondaire (3), et un rapport de démultiplication entre embrayage (11) et essieu moteur secondaire (3).

8. Procédé selon l'une quelconque des revendications précédentes, **caractérisé en ce que** le coefficient de friction de chaussée est déterminé à partir d'une accélération longitudinale du véhicule.

9. Procédé selon l'une quelconque des revendications précédentes, **caractérisé en ce que** le couple de transmission est à nouveau augmenté lorsque le patinage d'embrayage de l'embrayage (11) dépasse une valeur maximale.

10. Chaîne cinématique de propulsion (1) pour un véhicule pour la réalisation du procédé selon l'une ou plusieurs des revendications précédentes, avec au moins un essieu moteur primaire (2) et au moins un essieu moteur secondaire (3) qui sont reliés fonctionnellement par l'intermédiaire d'un embrayage (11) à un couple de transmission ajustable, **caractérisée en ce que** la chaîne cinématique de propulsion (1) est conçue pour éviter une surpression de l'embrayage, le couple de transmission est réduit par une réduction d'une force de compression de l'embrayage (11) alors que le couple transmis reste en fait le même, lorsqu'un patinage de roue dépassant une valeur seuil de patinage déterminée est identifié au niveau de l'essieu moteur secondaire (3).

**Fig.**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0659605 A

- DE 19954282